# EUROPEAN PATENT APPLICATION

(11) **EP 3 792 196 A1**
(43) Date of publication of application: **17.03.2021**
(21) Application number: 19800203.2
(22) Date of filing: 09.05.2019
(51) Int. Cl.: B65D 81/34, F16K 31/00, F16K 37/00

(54) **TIME-CONTROLLED VALVE WITH NOTIFICATION**

(30) Priority: 10.05.2018 ES 201830668 U
(71) Applicant: Terrón García, Pedro, 39700 Castro Urdiales (ES)
(72) Inventor: GONZALO DE FRANCISCO, Óscar, 48015 BILBAO (ES); TERRÓN GARCÍA, Pedro, 39700 CASTRO URDIALES (ES)
(74) Representative: Serrano Irurzun, Javier
(86) International application number: PCT/ES2019/070307
(87) International publication number: WO 2019/215371

(57) **Abstract**

The invention relates to a valve with time-controlled opening, provided for use in containers, receptacles or sealed elements. The valve can be a system integrated in the container, receptacle or sealed element itself, or an external system which is added to the element at the moment at which it is to be used. A valve of this type emits a signal at the time of opening, once determined temperature or vapour generation conditions have been achieved. In this way, the valve is activated by the increase in temperature of the sealed space, enabling it to be timed such that said activation occurs at the time and under conditions that have been previously determined, and enabling the user to have greater control.

## Description

### TECHNICAL FIELD

The present invention falls within the technical sector of warning and timing mechanical components.

### SUBJECT-MATTER OF THE INVENTION

The invention refers to a valve which consists of a warning and timing device activated when in contact with the vapor generated by an increase in temperature inside sealed or sealable spaces (whether packages, containers, atmospheres, devices, batteries, suits, circuits or whatever other sealed or sealable items). Once the valve's set time has elapsed, the valve allows the pressurized vapor to escape from the element by emitting a signal (acoustic, mechanical, thermal or visual) that can be detected by the user and/or by electronic means.

### BACKGROUND OF THE INVENTION

In certain sealed or sealable spaces (whether packages, containers, atmospheres, devices, batteries, suits, circuits or any other sealed or sealable elements), certain pressure, heating or evaporation factors cannot be controlled by the user. These situations are due to the variety of existing environments and the impossibility of verifying that certain favorable conditions occur during the preset optimal time for such heating or evaporation, which is a problem in the control of such pressure, heating or evaporation factors.

In these situations, the checks should be carried out by visual methods, touch or taste (in the case of food) at different times until finding the optimal point, with the risk that this point is exceeded or not reached, and the desired conditions in the process are not achieved. The state of the art shows numerous examples of possible solutions in this kind of applications, especially in the kitchen appliances sector. For example, it is worth mentioning the registered patent WO 99/32373 which consists of a package with a valve that releases the overpressure that occurs in a package when food is being cooked inside.

There are also systems that allow to monitor the condition of food by visual changes in the product or packaging or by sound signals, but these are non-timed systems that simply emit a sound when a certain amount of vapor overpressure is reached inside the package; the valve opens due to this overpressure and the vapor is blown out of the area that emits a sound (usually some type of whistle). Among other, the following systems: EP 0288862. App. Number: 88406157.6, WO 2007/091951A1 or # WO 2003/078266.

Additionally, the following inventions have been found:
- WO 99/32373: The invention relates to a packaging with a valve that releases the overpressure that occurs in a package when food is being cooked inside.
- WO 2003/078266 A1: In this case, it is a single-use valve for microwave packages that reacts in response to an excess pressure generated by the heat inside the package, which finally activates a whistle.
- WO 2002/087993 A1: This is also a one-way valve which reacts to an excess pressure inside the packaging by means of a sticker, and the valve closes again when the pressure decreases.
- WO 2007/091951 A1: In this patent, a pressure-operated valve is described again. The difference from the previous ones is that in this case the pressure acts on the adhesion force of a sticker. In addition, in this version, when the gas contained in the container is released it triggers an acoustic signal that by the oscillation of the gas when flowing out.

These solutions present two main issues: (i) They do not allow timing, but simply react to overpressure, preventing different scenarios or optimal point conditions from being established and (ii) they operate by over pressure, when certain scenarios (e.g. when used for food cooking control) they do not respond well to this condition and require temperature control.

As opposed to the above, the main innovations of this application are that; (i) it does not operate by excess pressure, but by means of a system that causes the valve to be activated by the temperature inside the container and that (ii) also allows its timing.

In addition, two other inventions that do not affect the present application us have been located, for their evident differences:
- WO 2008/088250 A1: In this case, the focus is on using a whistle from a food container valve, without even addressing the operation of the valve itself.
- WO 2004/106190 A1: It is an extension of WO 2002/087993. Here, the valve can be used in the food preparation procedures and is reused in the food reheating process; there is no variation that could affect the patent we are applying for.

The invention developed is a system clearly different from the existing ones that causes the valve to be activated by the increase of the temperature inside the sealed or sealable space (regardless of the type of space, either packages, containers, atmospheres, devices, batteries, suits, circuits or any type of sealed or sealable element), and which can also be timed so that the activation is carried out at the time and under conditions previously established to give a response by emitting a signal (acoustic, mechanical, thermal or visual)

### EXPLANATION OF THE INVENTION

It consists of a valve (which can be made of different materials) to be used in sealed spaces (regardless of the type of space, either packages, containers, atmospheres, devices, batteries, suits, circuits or any type of sealed or sealable element) that emits a signal (acoustic, mechanical, thermal or visual) at the time of opening, when certain conditions of temperature or vapor generation are reached, based on which it can be timed (by means of different timing mechanisms, both by use of different materials and by their arrangement or composition).

The valve consists of a body, a timer (with possible vapor inlet or contact with heat) and a warning element.

The timer is activated by the heat when in contact with the vapor (in the case where a fluid is subjected to a temperature rise that causes its evaporation and, therefore, there is an increase in pressure and temperature in the atmosphere that contains it) or in sublimation of solids.

The valve body allows timing the valve opening, based on the increase in temperature, or by time in contact of the valve inlet or body with the vapor generated by heating, sublimation or pressure. When the pre-set conditions have been reached, the valve opens allowing some of the accumulated vapor (plus the air) to escape, producing a signal (acoustic, mechanical, thermal or visual) that alerts you to the extent of these conditions.

To achieve this, the system supports different types of valves (depending on their material or composition), which although they achieve a similar result (signal warning when the set conditions are reached), may be more suitable due to the space where they are to be used (for example due to their composition in case they are used in contact with food). In this sense the materials used for the valve body and sealing system may have different combinations, the operation of which is explained as follows:
a) The valve body may be a hose of non-heat-resistant material (i.e. heat-sensitive) that houses a cap of heat-resistant material inside it closing the passage of vapor through the valve; the valve body acts as a timer, the body material softens when it comes into contact with the vapor due to its temperature and allows the air pressure to deform the material by increasing the vapor passage section. The seal between the inside of the valve body and the cap must be sufficient to prevent vapor from escaping, and this can be achieved in a variety of ways, such as using a flexible cap inside the valve body, or using of a viscous substance (glue, fat...) that allows sealing, thus avoiding vapor leaks.
b) The valve body may be a heat-resistant hose housing a timer consisting of a heat-shrink hose sealed in the inlet area, which can also be attached, and get shrunk in a fixed body to avoid blockages. This timer hose is in contact with the inside of the valve body, initially preventing the passage of vapor and air, allowing the areas of the timer in contact with vapor to shrink by the effect of the vapor temperature and reduce their diameter, thus leaving new timer areas in contact with vapor. The seal between the internal part of the valve body and the timer must be sufficient to prevent the vapor from escaping; this can be achieved by adding a flexible material inside the valve body (silicone, elastomer, etc.), introducing a heat-shrink material of the hose-shaped timer by blowing-in hot air or by using some viscous substance (glue, fats...) that allows sealing to prevent vapor leaks.

If the valve body includes a pre-stressed heat-resistant material, when closing the passage section with the sticker, with the pre-stressed sheets located in different areas of the duct, they allow the opening of the passage section by sectors, helping vapor pressure in the opening action thanks to its elastic recovery force.
c) A valve body made of heat-resistant material housing a fusible cap that prevents the passage of vapor and air which when coming into contact with vapor can also be used; the cap material plug melts and slides through the valve body, so the thickness/length of the cap gradually reduces when in contact with vapor. This cap can also be replaced by a plastic sheet to be is perforated by the core.
d) The valve body can be made of a flexible hose, being a timer the valve body itself, so its inner contour is deformed (crushed) to reduce the passage section, avoiding the passage of vapor. The inside of the deformable valve body is impregnated with temperature-sensitive adhesive which enables the timing activation mechanism to be operated, while contact with heat causes the adhesive to soften, and the vapor pressure deforms the valve body to increase the passage section by contacting new adhesive areas.
e) The flexible material described in the previous section can be used to wrap the valve body over itself. Contact with heat causes the body to recover its hose shape, gradually increasing the passage section until reaching the outlet area; the inside or the outside of the deformable valve body is impregnated with some type of temperature sensitive adhesive that allows modifying the timing activation mechanism, and the valve body may be of a shape memory material that allows the valve to be reused.

There are also different options for the warning element:
a) If it is a sound emitter, it can be set to play sound in certain frequency ranges that allow identification by the microwave, using it as a heating stop signal. The materials used must be highly permeable to microwaves, so that geometric changes are mainly caused by contact with water vapor.
b) Additionally, the warning signal (acoustic, mechanical, thermal or visual) issued by the valve can be used as a heating or pressure stop signal. This stop can be made by the user when hearing the signal or autonomously by the appliance if it has the correct detection system for the stop signal.

Finally, regarding the integration of the proposed invention, it can:
a) Be integrated into the package, container, atmosphere, device, battery, suit, circuit or sealed element itself.
b) Be an external system that is added to the element itself at the time it is to be used; or
c) Be included as a valve integration in generic containers

### A BRIEF DESCRIPTION OF THE DRAWINGS

To complement the description which is being made and to bring about a better understanding of the invention characteristics, as an integral part of that description a set of drawings has been added where, for illustrative and non-limiting purposes, the following is represented:

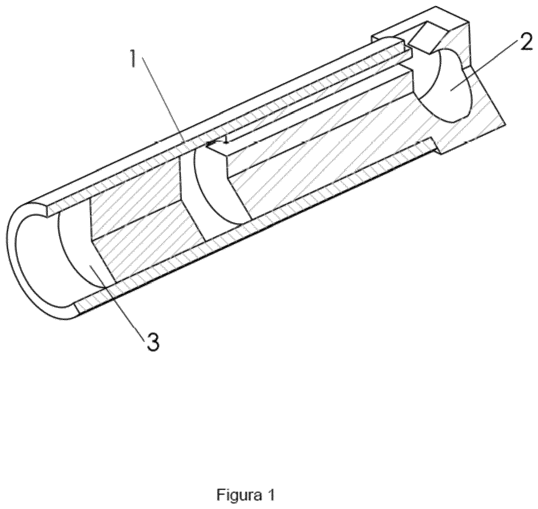

- Figure 1 shows a diagram of the valve identifying its generic components.

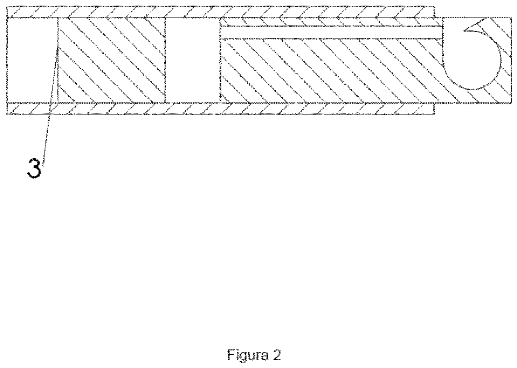

- Figure 2 shows a representation of the different areas where vapor passes through during valve operation.

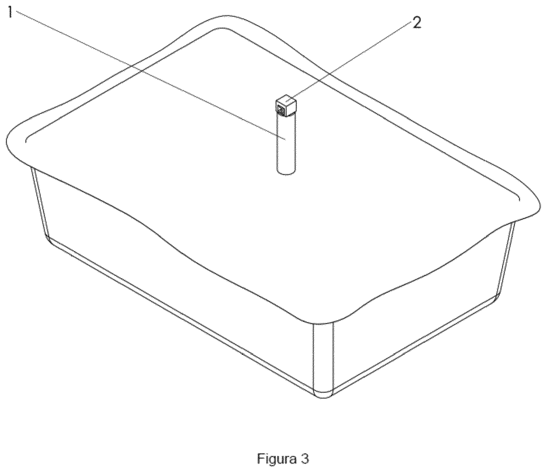

- Figure 3 shows a possible arrangement of the valve in a container and its cap.

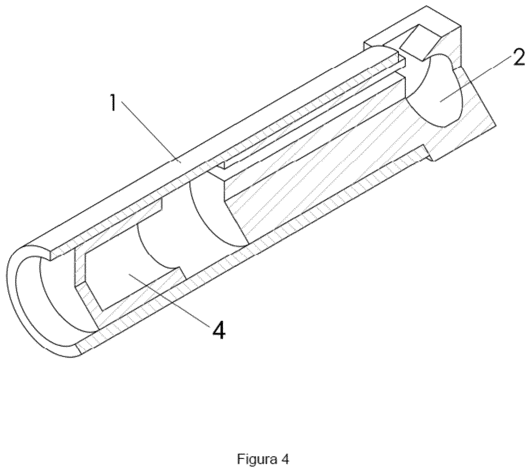

- Figure 4 shows the timer as a part of the valve body, represented in its initial state.

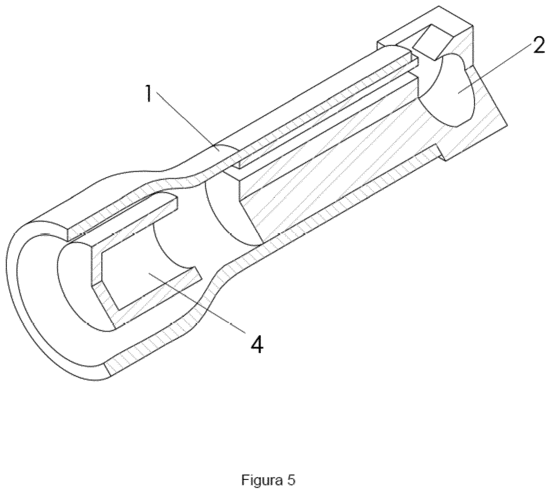

- Figure 5 shows the timer as a part of the valve body, represented in its final state that allows vapor to pass to a sound emitter.

### PREFERRED EMBODIMENTS OF THE INVENTION

Without any limiting character as to the scope of the invention described, but in order to better complement the understanding of its conception, a more detailed exposition of a preferred embodiment will follow, using the help of the annexed figures. As an example, such figures reproduce a valve body (1) consisting of a duct that restricts air and vapor circulation, where the inlet and the outlet/exhaust area are identified; the valve inlet area features an area of connection with the container which allows the inside of the valve to contact with the vapor and air from the container, followed by a timer (3) interleaved inside the valve body, separating its inlet and outlet areas.

The valve body also features an exit or exhaust area through which vapor and air come out after the timer is reached, followed by an warning element (e.g. a sound emitter, although the signal can be not only acoustic but also visual, thermal or other) (2) connected to the valve exhaust zone that emits a signal (acoustic, visual, mechanical, radio...) at the passage of the vapor and air, being exhausted to the oven's atmosphere.
The valve body (1) is a hose of non-heat-resistant material (i.e. with heat-sensitive characteristics) that houses a heat-resistant cap (4) that closes the passage of vapor through the valve.

The valve body acts as a timer. The body material softens upon contact with vapor due to its temperature, allowing the air pressure to deform the material and increasing the vapor passage section.

The process described is operated continuously over time, with new sections of the valve body entering in contact with the vapor; until the vapor is able to pass through the entire valve body thanks to the expansion of the valve.

Once the vapor can freely pass through the entire length of the valve body, it passes through the alert element, a sound emitter (2) in this example, emitting the signal (this time it will be an audible beep).

The vapor passage could be made through several types of holes arranged in the cup 5 (4) that allow it to pass to the sound emitter (2), without the need to completely separate the body (1) and cap (4). The length, thickness or thermo-mechanical properties of the valve body (1) and cap (4) materials allow adjusting the heating/cooking time of the food in the container.

The seal between the inside of the valve body (1) and the cap (4) must be sufficient to prevent the vapor from escaping. This can be achieved in different ways: (i) using a flexible cap inside of the valve body (silicone, elastomer...), (ii) using a viscous substance (glue, fat...) that allows sealing preventing vapor leaks.

The sound emitter (2) and cap (4) can be combined into one element.

The materials used must be highly permeable to microwaves, so that geometric changes are mainly caused by contact with vapor.

The valve body timer may be made of a shape memory material to allow the valve to be reused.

## Claims

1. Valve for any type of sealable space with an integrated adjustable timer that causes a warning signal to be emitted when the sealed space reaches the desired temperature and pressure conditions, and that reacts to heat in case the contents of the sealed space are subjected to an increase in temperature that causes the total or partial evaporation or sublimation of its contents, **characterized in that** the adjustable timer consists of a non-heat-resistant hose, i.e. heat-sensitive, that houses a heat-resistant cap sealed on the inlet area.

2. Valve for any type of sealable space with an integrated adjustable timer consisting of a heat-resistant hose that houses non-heat-resistant cap, i.e., heat-sensitive, sealed on the inlet area, that makes a warning signal to be emitted when the sealing space reaches the desired temperature and pressure conditions, and that reacts to heat in the event that the contents of the sealing space are subject to a temperature increase that causes the total or partial evaporation or sublimation of its contents, **characterized in that** the heat-resistant material is pre-stressed.

3. Valve for any type of sealable space with an integrated adjustable timer that causes a warning signal to be emitted when the sealed space reaches the desired temperature and pressure conditions, and that reacts to heat in case the contents of the sealed space are subjected to an increase in temperature that causes the evaporation or sublimation, total or partial, of its contents, **characterized in that** the adjustable timer consists of a flexible wrapped over itself, which remains wrapped as it is impregnated with heat sensitive adhesive.
